# EUROPEAN PATENT SPECIFICATION

(11) **EP 3 261 839 B1**
(45) Date of publication and mention of the grant of the patent: **04.08.2021**
(21) Application number: 15884935.6
(22) Date of filing: 17.03.2015
(51) Int. Cl.: B32B 5/02, B32B 7/12, B32B 27/32, B32B 27/30, B32B 15/08, B32B 15/20, B32B 27/08, B32B 27/12, B32B 27/34, B32B 27/36, B32B 37/02

(54) **MULTILAYER FILMS AND METHODS THEREOF**
MEHRSCHICHTIGE FOLIEN UND VERFAHREN DAFÜR
FILMS MULTICOUCHES ET PROCÉDÉS CORRESPONDANTS

(43) Date of publication of application: 03.01.2018
(73) Proprietor: ExxonMobil Chemical Patents Inc., Baytown TX 77520-2149 (US)
(72) Inventor: ZHU, Zhenyu, Shanghai 200136 (CN); SHEN, Zhiyi, Shanghai 201101 (CN); VAN LOON, Achiel, Josephus, Maria, 2900 Schoten (BE); DEKONINCK, Jean-Marc, 1320 Hamme-Mille (BE)
(74) Representative: ExxonMobil Chemical Europe Inc.
(86) International application number: PCT/CN2015/000183
(87) International publication number: WO 2016/145550

(56) References cited:
- WO-A1-2007/047134
- WO-A1-2008/017244
- WO-A1-2015/157876
- US-A1- 2003 091 850
- US-A1- 2012 100 356
- None

## Description

### FIELD OF THE INVENITON

This invention relates to films, and in particular, to multi-layer films comprising polyethylene, and methods for making such films. Also disclosed are lap seals comprising such films, and packages made therefrom.

### BACKGROUND OF THE INVENTION

Laminate films are widely used in a variety of packaging applications. Good mechanical properties such as elongation, tensile strength, dart impact strength, and puncture resistance are desired to ensure package integrity, especially during packaging and transportation. In flexible laminate film structures, a sealant film is adhered to a substrate film commonly made of biaxially oriented polyester (PET), biaxially oriented polypropylene (BOPP), or biaxially oriented polyamide (BOPA). Ethylene polymers, such as low density polyethylene (LDPE), linear low density polyethylene (LLDPE) prepared by Ziegler-Natta catalyst in a gas phase process, and blends thereof are generally employed in the art to form a sealant film. While such ethylene polymers work reasonably well because they provide relatively low-cost solutions, their properties restrict film mechanical performance for a number of applications. Efforts to address disadvantages caused by LDPE and LLDPE include incorporating and increasing metallocene polyethylenes (mPEs) in sealant films.

However, in the case of the above conventional laminate structure featuring a polyethylene sealant and a substrate made of, e.g. PET or BOPP, the subsequent sealing process favors the sealable skin of the polyethylene sealant to be sealed together because sealing is preferred between two sealable skins both made of polyethylene. A seal commonly known as fin seal is accordingly formed, which costs more materials than a lap seal does. In addition, the conventional laminate structure does not fit in with recycling, which also creates sustainability concern for use in flexible packaging. Therefore, while the above conventional laminate bears mechanical properties, such as bending stiffness, desired by packaging processability and attractive appearance and "hand-feel", it is difficult for laminate film manufacturers to reduce overall consumption of polymer materials without compromising film performance and recycling advantages.

WO 2014/042898 provides ethylene-based copolymers, particularly ethylene-based polymers having about 80.0 to 99.0 wt% of polymer units derived from ethylene and about 1.0 to about 20.0 wt% of polymer units derived from one or more C₃ to C₂₀ α-olefin comonomers; the ethylene-based polymer having a local maximum loss angle at a complex modulus, G*, of 2.50x10⁴ to 1.00x10⁶ Pa and a local minimum loss angle at a complex modulus, G*, of 1.00x10⁴ to 3.00^{∗}x10⁴ Pa. This patent application also includes articles, such as films, produced from such polymers and methods of making such articles.

U.S. Patent Publication No. 2012/0100356 relates to a multi-layer blown film with improved strength or toughness comprising a layer comprising a metallocene polyethylene (mPE) having a high melt index ratio (MIR), a layer comprising an mPE having a low MIR, and a layer comprising a HDPE, and/or LDPE. Other embodiments have skin layers and a plurality of sub-layers. At least one sub-layer includes an mPE, and at least one additional sub-layer includes HDPE and/or LDPE. The mPE has a density from about 0.910 to about 0.945 g/cm³, MI from about 0.1 to about 15 g/10 min, and melt index ratio (MIR) from about 15 to 25 (low-MIR mPE) and/or from greater than 25 to about 80 (high-MIR mPE). The process is related to supplying respective melt streams for coextrusion at a multi-layer die to form a blown film having the inner and outer skin layers and a plurality of sub-layers, wherein the skin layers and at least one of the sub-layers comprise mPE and at least one of the sub-layers comprise HDPE, LDPE or both. Draw-down, blow-up ratios and freeze-line distance from the die are controlled to facilitate a high production rate.

U.S. Patent No. 8,586,676 provides a polymer composition and articles made therefrom. The composition includes: (a) a polyethylene having (i) at least 50 wt% ethylene moieties; and (ii) up to 50 wt% of a C₃ to C₂₀ comonomer moieties, a density of about 0.860 to about 0.965 g/cm³, a melt index of about 0.1 to about 10.0 g/10 min and a branching index of about 0.96 to about 1.0; and (b) a polyethylene having: (i) at least 65 wt% ethylene moieties; and (ii) up to 35 wt% of a C₃ to C₂₀ comonomer moieties, the wt% s based upon the total weight of the latter polyethylene, a density of about 0.905 to about 0.945 g/cm³, a melt index (MI) of about 0.1 to about 10.0 g/10 min, and a branching index (g') of about 0.7 to about 0.95.

WO 2009/109367 discloses the use linear polyethylene having an MIR indicative of the presence of some long chain branching having a density of 0.91 to 0.94 g/cm³ determined according to ASTMD4703/D1505, an I_{2.16} (MI) of from 0.05 to 1 g/10 min, and I_{21.6}/I_{2.16} (MIR) of more than 35, the MI and MIR being determined according to ASTM 1238 D at 190°C, and a difference between the MD Tensile force based on ASTM D882-02 at 100% elongation and MD 10% Offset yield of a reference film as defined herein having a thickness of 25 [mu]m of at least 15MPa. This patent application also relates to coextruded film structures made using such linear polyethylene in the core layer of a multi-layer structure to provide easily processable, strong, highly transparent films.

That said, what is needed in the art is a laminate film to better balance between the mechanical properties required by stronger films for a given thickness and increased cost-effectiveness in polymer materials for a maintained or even improved film performance. Applicant has found that such objective can be achieved by applying a polyethylene derived from ethylene and one or more C₃ to C₂₀ α-olefin comonomers in each of the two substrate outer layers and the substrate core layer, and preparing two substrate inner layers between the substrate core layer and each substrate outer layer, each having a density of at least about 0.003 g/cm³ higher than that of the substrate outer layer on the same side of the substrate core layer, to produce a substrate of a multi-layer laminate film. The inventive film, in addition to having a bending stiffness at a comparable or even improved level, can outperform a conventional laminate film using a conventional non-polyethylene substrate in other mechanical properties, including elongation, puncture energy, and low-temperature bag drop performance. Particularly, in the presence of a sealant also comprising a polyethylene derived from ethylene and one or more C₃ to C₂₀ α-olefin comonomers, a lap seal can be obtained by sealing the sealable skin of the polyethylene sealant to that of the polyethylene substrate instead, which can save the extra amount of polyethylene incurred by a fin seal. Furthermore, such laminate films can be recyclable. All of the above advantages make the inventive laminate film well suited for flexible packaging applications favoring a good balance between mechanical properties and material cost-effectiveness. Therefore, by replacing the currently available selection of substrates with a polyethylene one as described herein, the inventive laminate film can be qualified as a desired alternative to conventional laminates.

US 2012/0100356 A1 discloses multilayer blown film with improved strength or toughness comprising a layer comprising a metallocene polyethylene (mPE) having a high melt index ratio (MIR), a layer comprising an mPE having a low MIR, and a layer comprising a HDPE, and/or LDPE. Other embodiments have skin layers and a plurality of sublayers. WO 2007/047134 A1 discloses multi-layer films for packaging, including a core layer, a tie layer made from at least 10 wt% of a first polymer and a service layer, wherein the tie layer is a scalable layer and may provide a hermetic seal when sealed to itself. Optionally, the multi-layer film may have a skin layer and/or a second skin layer. WO 2015/157876 A1 discloses a further known prior art.

### SUMMARY OF THE INVENTION

Provided are multi-layer films comprising polyethylene, and methods for making such films. Also disclosed are lap seals comprising such films, packages made therefrom.

In one embodiment, the present invention encompasses a multi-layer film according to claims 1-13.

In another embodiment, the present invention relates to a method for making a multi-layer film according to claims 14 and 15.

Also disclosed are lap seals comprising any of the multi-layer films described herein or made according to any method disclosed herein. Packages comprising the lap seals described herein are also disclosed.

### BRIEF DESCRIPTION OF THE DRAWINGS

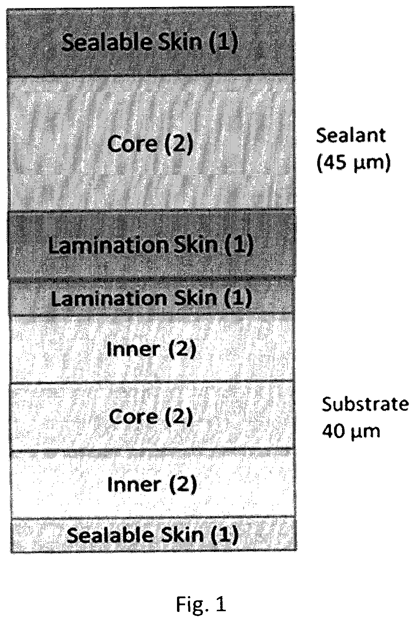

Figure 1 depicts a schematic representation of film structures for the inventive films in Examples 1 and 2.

### DETAILED DESCRIPTION OF THE PRESENT INVENTION

Various specific embodiments, versions of the present invention will now be described, including preferred embodiments and definitions that are adopted herein. While the following detailed description gives specific preferred embodiments, those skilled in the art will appreciate that these embodiments are exemplary only, and that the present invention can be practiced in other ways. Any reference to the "invention" may refer to one or more, but not necessarily all, of the present inventions defined by the claims. The use of headings is for purposes of convenience only and does not limit the scope of the present invention.

As used herein, a "polymer" may be used to refer to homopolymers, copolymers, interpolymers, terpolymers, etc. A "polymer" has two or more of the same or different monomer units. A "homopolymer" is a polymer having monomer units that are the same. A "copolymer" is a polymer having two or more monomer units that are different from each other. A "terpolymer" is a polymer having three monomer units that are different from each other. The term "different" as used to refer to monomer units indicates that the monomer units differ from each other by at least one atom or are different isomerically. Accordingly, the definition of copolymer, as used herein, includes terpolymers and the like. Likewise, the definition of polymer, as used herein, includes copolymers and the like. Thus, as used herein, the terms "polyethylene," "ethylene polymer," "ethylene copolymer," and "ethylene based polymer" mean a polymer or copolymer comprising at least 50 mol% ethylene units (preferably at least 70 mol% ethylene units, more preferably at least 80 mol% ethylene units, even more preferably at least 90 mol% ethylene units, even more preferably at least 95 mol% ethylene units or 100 mol% ethylene units (in the case of a homopolymer)). Furthermore, the term "polyethylene composition" means a composition containing one or more polyethylene components.

As used herein, when a polymer is referred to as comprising a monomer, the monomer is present in the polymer in the polymerized form of the monomer or in the derivative form of the monomer.

As used herein, when a polymer is said to comprise a certain percentage, wt%, of a monomer, that percentage of monomer is based on the total amount of monomer units in the polymer.

For purposes of this invention and the claims thereto, an ethylene polymer having a density of 0.910 to 0.940 g/cm³ is referred to as a "low density polyethylene" (LDPE); an ethylene polymer having a density of 0.890 to 0.930 g/cm³, typically from 0.910 to 0.930 g/cm³, that is linear and does not contain a substantial amount of long-chain branching is referred to as "linear low density polyethylene" (LLDPE) and can be produced with conventional Ziegler-Natta catalysts, vanadium catalysts, or with metallocene catalysts in gas phase reactors, high pressure tubular reactors, and/or in slurry reactors and/or with any of the disclosed catalysts in solution reactors ("linear" means that the polyethylene has no or only a few long-chain branches, typically referred to as a g'vis of 0.97 or above, preferably 0.98 or above); and an ethylene polymer having a density of more than 0.940 g/cm³ is referred to as a "high density polyethylene" (HDPE).

As used herein, "core" layer, "outer" layer, and "inner" layer are merely identifiers used for convenience, and shall not be construed as limitation on individual layers, their relative positions, or the laminated structure, unless otherwise specified herein.

As used herein, "first" polyethylene, "second" polyethylene, "third" polyethylene, "fourth" polyethylene, "fifth" polyethylene, and "sixth" polyethylene are merely identifiers used for convenience, and shall not be construed as limitation on individual polyethylene, their relative order, or the number of polyethylenes used, unless otherwise specified herein.

As used herein, film layers that are the same in composition and in thickness are referred to as "identical" layers.

### Polyethylene

In one aspect of the invention, the polyethylene that can be used for the multi-layer film described herein are selected from ethylene homopolymers, ethylene copolymers, and compositions thereof. Useful copolymers comprise one or more comonomers in addition to ethylene and can be a random copolymer, a statistical copolymer, a block copolymer, and/or compositions thereof. The method of making the polyethylene is not critical, as it can be made by slurry, solution, gas phase, high pressure or other suitable processes, and by using catalyst systems appropriate for the polymerization of polyethylenes, such as Ziegler-Natta-type catalysts, chromium catalysts, metallocene-type catalysts, other appropriate catalyst systems or combinations thereof, or by free-radical polymerization. In a preferred embodiment, the polyethylenes are made by the catalysts, activators and processes described in U.S. Patent Nos. 6,342,566; 6,384,142; and 5,741,563; and WO 03/040201 and WO 97/19991. Such catalysts are well known in the art, and are described in, for example, ZIEGLER CATALYSTS (Gerhard Fink, Rolf Mülhaupt and Hans H. Brintzinger, eds., Springer-Verlag 1995); Resconi et al.; and I, II METALLOCENE-BASED POLYOLEFINS (Wiley & Sons 2000).

Polyethylenes that are useful in this invention include those sold by ExxonMobil Chemical Company in Houston Texas, including HDPE, LLDPE, and LDPE; and those sold under the ENABLE™, EXACT™, EXCEED™, ESCORENE™, EXXCO™, ESCOR™, PAXON™, and OPTEMA™ tradenames.

Preferred ethylene homopolymers and copolymers useful in this invention typically have one or more of the following properties:
1. an M_{w} of 20,000 g/mol or more, 20,000 to 2,000,000 g/mol, preferably 30,000 to 1,000,000, preferably 40,000 to 200,000, preferably 50,000 to 750,000, as measured by size exclusion chromatography; and/or
2. a Tₘ of 30°C to 150°C, preferably 30°C to 140°C, preferably 50°C to 140°C, more preferably 60°C to 135°C, as determined based on ASTM D3418-03; and/or
3. a crystallinity of 5% to 80%, preferably 10% to 70%, more preferably 20% to 60%, preferably at least 30%, or at least 40%, or at least 50%, as determined based on ASTM D3418-03; and/or
4. a heat of fusion of 300 J/g or less, preferably 1 to 260 J/g, preferably 5 to 240 J/g, preferably 10 to 200 J/g, as determined based on ASTM D3418-03; and/or
5. a crystallization temperature (T_{c}) of 15°C to 130°C, preferably 20°C to 120°C, more preferably 25°C to 110°C, preferably 60°C to 125°C, as determined based on ASTM D3418-03; and/or
6. a heat deflection temperature of 30°C to 120°C, preferably 40°C to 100°C, more preferably 50°C to 80°C as measured based on ASTM D648 on injection molded flexure bars, at 66 psi load (455 kPa); and/or
7. a Shore hardness (D scale) of 10 or more, preferably 20 or more, preferably 30 or more, preferably 40 or more, preferably 100 or less, preferably from 25 to 75 (as measured based on ASTM D 2240); and/or
8. a percent amorphous content of at least 50%, preferably at least 60%, preferably at least 70%, more preferably between 50% and 95%, or 70% or less, preferably 60% or less, preferably 50% or less as determined by subtracting the percent crystallinity from 100.

The polyethylene may be an ethylene homopolymer, such as HDPE. In one embodiment, the ethylene homopolymer has a molecular weight distribution (M_{w}/Mₙ) or (MWD) of up to 40, preferably ranging from 1.5 to 20, or from 1.8 to 10, or from 1.9 to 5, or from 2.0 to 4. In another embodiment, the 1% secant flexural modulus (determined based on ASTM D790A, where test specimen geometry is as specified under the ASTM D790 section "Molding Materials (Thermoplastics and Thermosets)," and the support span is 2 inches (5.08 cm)) of the polyethylene falls in a range of 200 to 1000 MPa, and from 300 to 800 MPa in another embodiment, and from 400 to 750 MPa in yet another embodiment, wherein a desirable polymer may exhibit any combination of any upper flexural modulus limit with any lower flexural modulus limit. The MI of preferred ethylene homopolymers range from 0.05 to 800 dg/min in one embodiment, and from 0.1 to 100 dg/min in another embodiment, as measured based on ASTM D1238 (190°C, 2.16 kg).

In a preferred embodiment, the polyethylene comprises less than 20 mol% propylene units (preferably less than 15 mol%, preferably less than 10 mol%, preferably less than 5 mol%, and preferably 0 mol% propylene units).

In another embodiment of the invention, the polyethylene useful herein is produced by polymerization of ethylene and, optionally, an alpha-olefin with a catalyst having, as a transition metal component, a bis (n-C₃₋₄ alkyl cyclopentadienyl) hafnium compound, wherein the transition metal component preferably comprises from about 95 mol% to about 99 mol% of the hafnium compound as further described in U.S. Patent No. 9,956,088.

In another embodiment of the invention, the polyethylene is an ethylene copolymer, either random or block, of ethylene and one or more comonomers selected from C₃ to C₂₀ α-olefins, typically from C₃ to C₁₀ α-olefins. Preferably, the comonomers are present from 0.1 wt% to 50 wt% of the copolymer in one embodiment, and from 0.5 wt% to 30 wt% in another embodiment, and from 1 wt% to 15 wt% in yet another embodiment, and from 0.1 wt% to 5 wt% in yet another embodiment, wherein a desirable copolymer comprises ethylene and C₃ to C₂₀ α-olefin derived units in any combination of any upper wt% limit with any lower wt% limit described herein. Preferably the ethylene copolymer will have a weight average molecular weight of from greater than 8,000 g/mol in one embodiment, and greater than 10,000 g/mol in another embodiment, and greater than 12,000 g/mol in yet another embodiment, and greater than 20,000 g/mol in yet another embodiment, and less than 1,000,000 g/mol in yet another embodiment, and less than 800,000 g/mol in yet another embodiment, wherein a desirable copolymer may comprise any upper molecular weight limit with any lower molecular weight limit described herein.

In another embodiment, the ethylene copolymer comprises ethylene and one or more other monomers selected from the group consisting of C₃ to C₂₀ linear, branched or cyclic monomers, and in some embodiments is a C₃ to C₁₂ linear or branched alpha-olefin, preferably butene, pentene, hexene, heptene, octene, nonene, decene, dodecene, 4-methyl-pentene-1,3-methyl pentene-1,3,5,5-trimethyl-hexene-1, and the like. The monomers may be present at up to 50 wt%, preferably from up to 40 wt%, more preferably from 0.5 wt% to 30 wt%, more preferably from 2 wt% to 30 wt%, more preferably from 5 wt% to 20 wt%, based on the total weight of the ethylene copolymer.

Preferred linear alpha-olefins useful as comonomers for the ethylene copolymers useful in this invention include C₃ to C₈ alpha-olefins, more preferably 1-butene, 1-hexene, and 1-octene, even more preferably 1-hexene. Preferred branched alpha-olefins include 4-methyl-1-pentene, 3-methyl-1-pentene, 3,5,5-trimethyl-1-hexene, and 5-ethyl-1-nonene. Preferred aromatic-group-containing monomers contain up to 30 carbon atoms. Suitable aromatic-group-containing monomers comprise at least one aromatic structure, preferably from one to three, more preferably a phenyl, indenyl, fluorenyl, or naphthyl moiety. The aromatic-group-containing monomer further comprises at least one polymerizable double bond such that after polymerization, the aromatic structure will be pendant from the polymer backbone. The aromatic-group containing monomer may further be substituted with one or more hydrocarbyl groups including but not limited to C₁ to C₁₀ alkyl groups. Additionally, two adjacent substitutions may be joined to form a ring structure. Preferred aromatic-group-containing monomers contain at least one aromatic structure appended to a polymerizable olefinic moiety. Particularly, preferred aromatic monomers include styrene, alpha-methylstyrene, para-alkylstyrenes, vinyltoluenes, vinylnaphthalene, allyl benzene, and indene, especially styrene, paramethyl styrene, 4-phenyl-1-butene and allyl benzene.

Preferred diolefin monomers useful in this invention include any hydrocarbon structure, preferably C₄ to C₃₀, having at least two unsaturated bonds, wherein at least two of the unsaturated bonds are readily incorporated into a polymer by either a stereospecific or a non-stereospecific catalyst(s). It is further preferred that the diolefin monomers be selected from alpha, omega-diene monomers (i.e., di-vinyl monomers). More preferably, the diolefin monomers are linear di-vinyl monomers, most preferably those containing from 4 to 30 carbon atoms. Examples of preferred dienes include butadiene, pentadiene, hexadiene, heptadiene, octadiene, nonadiene, decadiene, undecadiene, dodecadiene, tridecadiene, tetradecadiene, pentadecadiene, hexadecadiene, heptadecadiene, octadecadiene, nonadecadiene, icosadiene, heneicosadiene, docosadiene, tricosadiene, tetracosadiene, pentacosadiene, hexacosadiene, heptacosadiene, octacosadiene, nonacosadiene, triacontadiene, particularly preferred dienes include 1,6-heptadiene, 1,7-octadiene, 1,8-nonadiene, 1,9-decadiene, 1,10-undecadiene, 1,11-dodecadiene, 1,12-tridecadiene, 1,13-tetradecadiene, and low molecular weight polybutadienes (Mw less than 1000 g/mol). Preferred cyclic dienes include cyclopentadiene, vinylnorbornene, norbornadiene, ethylidene norbornene, divinylbenzene, dicyclopentadiene, or higher ring containing diolefins with or without substituents at various ring positions.

In a preferred embodiment, one or more dienes are present in the polyethylene at up to 10 wt%, preferably at 0.00001 wt% to 2 wt%, preferably 0.002 wt% to 1 wt%, even more preferably 0.003 wt% to 0.5 wt%, based upon the total weight of the polyethylene. In some embodiments, diene is added to the polymerization in an amount of from an upper limit of 500 ppm, 400 ppm, or 300 ppm to a lower limit of 50 ppm, 100 ppm, or 150 ppm.

Preferred ethylene copolymers useful herein are preferably a copolymer comprising at least 50 wt% ethylene and having up to 50 wt%, preferably 1 wt% to 35 wt%, even more preferably 1 wt% to 6 wt% of a C₃ to C₂₀ comonomer, preferably a C₄ to C₈ comonomer, preferably hexene or octene, based upon the weight of the copolymer. Preferably these polymers are metallocene polyethylenes (mPEs).

Useful mPE homopolymers or copolymers may be produced using mono- or bis-cyclopentadienyl transition metal catalysts in combination with an activator of alumoxane and/or a non-coordinating anion in solution, slurry, high pressure or gas phase. The catalyst and activator may be supported or unsupported and the cyclopentadienyl rings may be substituted or unsubstituted. Several commercial products produced with such catalyst/activator combinations are commercially available from ExxonMobil Chemical Company in Houston, Texas under the tradename EXCEED™ Polyethylene or ENABLE™ Polyethylene.

In a class of embodiments, the multi-layer film of the present invention comprises in each of the two substrate outer layers and the substrate core layer a first polyethylene (as a polyethylene defined herein) derived from ethylene and one or more C₃ to C₂₀ α-olefin comonomers, having a density of about 0.900 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 100. In various embodiments, the first polyethylene may have one or more of the following properties:
(a) a density (sample prepared according to ASTM D-4703, and the measurement according to ASTM D-1505) of about 0.900 to 0.940 g/cm³, or about 0.912 to about 0.935 g/cm³;
(b) an MI (I_{2.16}, ASTM D-1238, 2.16 kg, 190°C) of about 0.1 to about 15 g/10 min, or about 0.3 to about 10 g/10 min, or about 0.5 to about 5 g/10 min;
(c) an MIR (I_{21.6} (190°C, 21.6 kg)/I_{2.16} (190°C, 2.16 kg)) of about 10 to about 100, or about 15 to about 80, or about 16 to about 50;
(d) a Composition Distribution Breadth Index ("CDBI") of up to about 85%, or up to about 75%, or about 5 to about 85%, or 10 to 75%. The CDBI may be determined using techniques for isolating individual fractions of a sample of the resin. The preferred technique is Temperature Rising Elution Fraction ("TREF"), as described in Wild, et al., J. Poly. Sci., Poly. Phys. Ed., Vol. 20, p. 441 (1982), which is incorporated herein for purposes of U.S. practice;
(e) an MWD of about 1.5 to about 5.5; MWD is measured using a gel permeation chromatograph ("GPC") equipped with a differential refractive index ("DRI") detector; and/or
(f) a branching index of about 0.9 to about 1.0, or about 0.96 to about 1.0, or about 0.97 to about 1.0. Branching Index is an indication of the amount of branching of the polymer and is defined as g'=[Rg]²*_{br}*/[Rg]²*ₗᵢₙ.* "Rg" stands for Radius of Gyration, and is measured using a Waters 150 gel permeation chromatograph equipped with a Multi-Angle Laser Light Scattering ("MALLS") detector, a viscosity detector and a differential refractive index detector. "[Rg]*_{br}*" is the Radius of Gyration for the branched polymer sample and "[Rg]*ₗᵢₙ*" is the Radius of Gyration for a linear polymer sample.

The first polyethylene is not limited by any particular method of preparation and may be formed using any process known in the art. For example, the first polyethylene may be formed using gas phase, solution, or slurry processes.

In one embodiment, the first polyethylene is formed in the presence of a metallocene catalyst. For example, the first polyethylene may be an mPE produced using mono- or bis-cyclopentadienyl transition metal catalysts in combination with an activator of alumoxane and/or a non-coordinating anion in solution, slurry, high pressure or gas phase. The catalyst and activator may be supported or unsupported and the cyclopentadienyl rings may be substituted or unsubstituted. mPEs useful as the first polyethylene include those commercially available from ExxonMobil Chemical Company in Houston, Texas, such as those sold under the trade designation EXCEED™ or ENABLE™.

In accordance with a preferred embodiment, the multi-layer film described herein further comprises in at least one of the two substrate outer layers a second polyethylene (as a polyethylene defined herein) derived from ethylene and one or more C₃ to C₂₀ α-olefin comonomers, having a density of about 0.910 to about 0.945 g/cm³, an MI, I_{2.16}, of about 0.1 to about 15 g/10 min, an MWD of about 2.5 to about 5.5, and an MIR, I_{21.6}/I_{2.16}, of about 25 to about 100. In various embodiments, the second polyethylene may have one or more of the following properties:
(a) a density (sample prepared according to ASTM D-4703, and the measurement according to ASTM D-1505) of about 0.910 to about 0.945 g/cm³, or about 0.915 to about 0.940 g/cm³;
(b) an MI (I_{2.16}, ASTMD-1238, 2.16 kg, 190°C) of about 0.1 to about 15 g/10 min, or about 0.1 to about 10 g/10 min, or about 0.1 to about 5 g/10 min;
(c) an MIR (I_{21.6} (190°C, 21.6 kg)/I_{2.16} (190°C, 2.16 kg)) of greater than 25 to about 100, or greater than 30 to about 90, or greater than 35 to about 80;
(d) a Composition Distribution Breadth Index ("CDBI", determined according to the procedure disclosed herein) of greater than about 50%, or greater than about 60%, or greater than 75%, or greater than 85%;
(e) an MWD of about 2.5 to about 5.5; MWD is measured according to the procedure disclosed herein; and/or
(f) a branching index ("g", determined according to the procedure described herein) of about 0.5 to about 0.97, or about 0.7 to about 0.95.

The second polyethylene is not limited by any particular method of preparation and may be formed using any process known in the art. For example, the second polyethylene may be formed using gas phase, solution, or slurry processes.

In one embodiment, the second polyethylene is formed in the presence of a Ziegler-Natta catalyst. In another embodiment, the second polyethylene is formed in the presence of a single-site catalyst, such as a metallocene catalyst (such as any of those described herein). Polyethylenes useful as the second polyethylene in this invention include those disclosed in U.S. Patent No. 6,255,426, entitled "Easy Processing Linear Low Density Polyethylene" (Lue), and include those commercially available from ExxonMobil Chemical Company in Houston, Texas, such as those sold under the trade designation ENABLE™.

In another preferred embodiment, the multi-layer film of the present invention comprises in at least one of the substrate inner layers a third polyethylene (as a polyethylene defined herein) having a density of at least about 0.935 g/cm³, preferably about 0.935 g/cm³ to about 0.965 g/cm³. The third polyethylene is typically prepared with either Ziegler-Natta, chromium-based catalysts, or single-site catalysts, such as a metallocene catalyst (such as any of those described herein) in slurry reactors, gas phase reactors, or solution reactors. Polyethylenes useful as the third polyethylene in this invention include those commercially available from ExxonMobil Chemical Company in Houston, Texas, such as HDPE or those sold under the trade designation ENABLE™.

The sealant of the multi-layer film described herein comprises two sealant outer layers and a sealant core layer between the two sealant outer layers, each of the two sealant outer layers and the sealant core layer comprises a fourth polyethylene derived from ethylene and one or more C₃ to C₂₀ α-olefin comonomers, having a density of about 0.900 to about 0.940 g/cm³, an MI, I_{2.16}, of about 0.1 to about 15 g/10 min, an MWD of about 1.5 to about 5.5, and an MIR, I_{21.6}/I_{2.16}, of about 10 to about 100. In various embodiments, the fourth polyethylene may have one or more of the properties or be prepared as defined above for the first polyethylene. The fourth polyethylene may be the same as or different from the first polyethylene. Preferably, at least one of the two sealant outer layers further comprises a fifth polyethylene derived from ethylene and one or more C₃ to C₂₀ α-olefin comonomers, having a density of about 0.910 to about 0.945 g/cm³, an MI, I_{2.16}, of about 0.1 to about 15 g/10 min, an MWD of about 2.5 to about 5.5, and an MIR, I_{21.6}/I_{2.16}, of about 25 to about 100. In various embodiments, the fifth polyethylene may have one or more of the properties or be prepared as defined above for the second polyethylene. The fifth polyethylene may be the same as or different from the second polyethylene. Preferably, the sealant core layer further comprises a sixth polyethylene having a density of at least about 0.935 g/cm³. In various embodiments, the sixth polyethylene may conform to characteristics as set out above for the third polyethylene. The sixth polyethylene may be the same as or different from the third polyethylene.

The two substrate outer layers and the substrate core layer of the multi-layer film can each include the first polyethylene described herein optionally in a blend with one or more other polymers, such as polyethylenes defined herein, which blend is referred to as polyethylene composition. In particular, the polyethylene compositions described herein may be physical blends or *in situ* blends of more than one type of polyethylene or compositions of polyethylenes with polymers other than polyethylenes where the polyethylene component is the majority component, e.g., greater than 50 wt% of the total weight of the composition. Preferably, the polyethylene composition is a blend of two polyethylenes with different densities. Preferably, at least one of the two substrate outer layers of the multi-layer film of the present invention comprises the second polyethylene described herein, present in an amount of no more than about 50 wt%, no more than about 45 wt%, no more than about 40 wt%, no more than about 35 wt%, no more than about 30 wt%, no more than about 25 wt%, no more than about 20 wt%, no more than about 15 wt%, no more than about 10 wt%, or no more than about 5 wt%, based on the total weight of polymer in the substrate outer layer. Preferably, the substrate core layer of the multi-layer film of the present invention comprises the first polyethylene described herein present in an amount of about 60 wt% to about 100 wt%, about 65 wt% to about 100 wt%, about 70 wt% to about 100 wt%, about 75 wt% to about 100 wt%, about 80 wt% to about 100 wt%, about 85 wt% to about 100%, about 90 wt% to about 100 wt%, or about 95 wt% to about 100 wt%, based on the total weight of polymer in the substrate core layer. The two substrate inner layers can also each optionally include a polyethylene composition comprising polyethylenes defined herein. Preferably, the two substrate inner layers each comprises the third polyethylene described herein in an amount of about 60 wt% to about 100 wt%, about 65 wt% to about 100 wt%, about 70 wt% to about 100 wt%, about 75 wt% to about 100 wt%, about 80 wt% to about 100 wt%, about 85 wt% to about 100%, about 90 wt% to about 100 wt%, or about 95 wt% to about 100 wt%, based on total weight of polymer in the substrate inner layer. The two substrate inner layers each has a density of at least 0.003 g/cm³ higher than that of the substrate outer layer on the same side of the substrate core layer.

The sealant of the multi-layer film described herein comprises two sealant outer layers and a sealant core layer between the two sealant outer layers, the two sealant outer layers and the sealant core layer of the multi-layer film each includes the fourth polyethylene described herein optionally in a polyethylene composition with one or more other polymers, such as polyethylene defined herein. Preferably, the polyethylene composition is a blend of two polyethylenes with different densities. Preferably, at least one of the two sealant outer layers of the multi-layer film of the present invention further comprises the fifth polyethylene described herein, present in an amount of no more than about 50 wt%, no more than about 45 wt%, no more than about 40 wt%, no more than about 35 wt%, no more than about 30 wt%, no more than about 25 wt%, no more than about 20 wt%, no more than about 15 wt%, no more than about 10 wt%, or no more than about 5 wt%, based on the total weight of polymer in the sealant outer layer. Preferably, the sealant core layer of the multi-layer film of the present invention further comprises the sixth polyethylene described herein present in an amount of no more than about 80 wt%, no more than about 70 wt%, no more than about 60 wt%, no more than about 50 wt%, no more than about 40 wt%, no more than about 30 wt%, no more than about 20 wt%, or no more than about 10 wt%, based on the total weight of polymer in the sealant core layer. Preferably, the sealant core layer has an average density higher than that of at least one of the sealant outer layer.

It has been surprisingly discovered that introduction of the first polyethylene described herein into a multi-layer substrate of a laminate structure may generate significant advantage in mechanical performance over a laminate structure formed by a conventional PET or BOPP substrate. Specifically, when a multi-layer laminate film is prepared by two substrate outer layers each comprising the first polyethylene, preferably in a blend with the second polyethylene described herein, a substrate core layer also comprising the first polyethylene, and two substrate inner layers each having a density of at least about 0.003 g/cm³ higher than that of the substrate outer layer on the same side of the substrate core layer, mechanical properties including elongation, puncture energy, and low-temperature bag drop performance of such inventive film can be greatly enhanced with a similar or even improved bending stiffness, in contrast to a multi-layer laminate film containing a conventional non-polyethylene substrate. Moreover, in the case of a sealant including the fourth polyethylene described herein, the inventive film can also allow formation of a lap seal, which is not feasible with a conventional laminate structure, thus leading to reduced material consumption. As a result, the inventive film can serve as a desired alternative to currently available laminate options for flexible packaging applications where superior mechanical performance and material cost-effectiveness are expected.

### Film Structures

The multi-layer film of the present invention may further comprise additional layer(s), which may be any layer typically included in multi-layer film constructions. For example, the additional layer(s) may be made from:
1. Polyolefins. Preferred polyolefins include homopolymers or copolymers of C₂ to C₄₀ olefins, preferably C₂ to C₂₀ olefins, preferably a copolymer of an α-olefin and another olefin or α-olefin (ethylene is defined to be an α-olefin for purposes of this invention). Preferably homopolyethylene, homopolypropylene, propylene copolymerized with ethylene and/or butene, ethylene copolymerized with one or more of propylene, butene or hexene, and optional dienes. Preferred examples include thermoplastic polymers such as ultra-low density polyethylene, very low density polyethylene, linear low density polyethylene, low density polyethylene, medium density polyethylene, high density polyethylene, polypropylene, isotactic polypropylene, highly isotactic polypropylene, syndiotactic polypropylene, random copolymer of propylene and ethylene and/or butene and/or hexene, elastomers such as ethylene propylene rubber, ethylene propylene diene monomer rubber, neoprene, and compositions of thermoplastic polymers and elastomers, such as, for example, thermoplastic elastomers and rubber toughened plastics.
2. Polar polymers. Preferred polar polymers include homopolymers and copolymers of esters, amides, acetates, anhydrides, copolymers of a C₂ to C₂₀ olefin, such as ethylene and/or propylene and/or butene with one or more polar monomers, such as acetates, anhydrides, esters, alcohol, and/or acrylics. Preferred examples include polyesters, polyamides, ethylene vinyl acetate copolymers, and polyvinyl chloride.
3. Cationic polymers. Preferred cationic polymers include polymers or copolymers of geminally disubstituted olefins, α-heteroatom olefins and/or styrenic monomers. Preferred geminally disubstituted olefins include isobutylene, isopentene, isoheptene, isohexane, isooctene, isodecene, and isododecene. Preferred α-heteroatom olefins include vinyl ether and vinyl carbazole, preferred styrenic monomers include styrene, alkyl styrene, para-alkyl styrene, α-methyl styrene, chloro-styrene, and bromo-para-methyl styrene. Preferred examples of cationic polymers include butyl rubber, isobutylene copolymerized with para methyl styrene, polystyrene, and poly-α-methyl styrene.
4. Miscellaneous. Other preferred layers can be paper, wood, cardboard, metal, metal foils (such as aluminum foil and tin foil), metallized surfaces, glass (including silicon oxide (SiOₓ) coatings applied by evaporating silicon oxide onto a film surface), fabric, spunbond fibers, and non-wovens (particularly polypropylene spunbond fibers or non-wovens), and substrates coated with inks, dyes, pigments, and the like.

In particular, a multi-layer film can also include layers comprising materials such as ethylene vinyl alcohol (EVOH), polyamide (PA), polyvinylidene chloride (PVDC), or aluminium, so as to obtain barrier performance for the film where appropriate.

The thickness of the multi-layer films may range from 10 to 200 µm in general and is mainly determined by the intended use and properties of the film. Stretch films may be thin; those for shrink films or heavy duty bags are much thicker. Conveniently, the film has a thickness of from 10 to 200 µm, from 20 to 150 µm, from 30 to 120 µm, or from 40 to 100 µm. Preferably, the thickness ratio between the substrate and the sealant is about 3:1 to about 1:2, for example, about 2.5:1, about 2:1, about 1.5:1, about 1:1, about 1:1.5, about 1:2, or in the range of any combination of the values recited herein. Preferably, the two substrate inner layers are present at a thickness of about 20% to about 70%, for example, anywhere between 20%, 25%, 30%, 35%, or 40%, and 50%, 55%, 60%, 65%, or 70%, of total thickness of the substrate. Preferably, the thickness ratio between one of the sealant outer layers and the sealant core layer is about 1:1 to about 1:4, for example, about 1:1, about 1:1.5, about 1:2, about 1:2.5, about 1:3, about 1:3.5, or about 1:4.

The multi-layer film described herein may have an A/B/X/B/A structure for the substrate, wherein A are substrate outer layers and X represents the substrate core layer and B are substrate inner layers between the substrate core layer and each substrate outer layer. Suitably one or both substrate outer layers are a skin layer forming one or both substrate surfaces and can serve as a lamination skin (the surface to be adhered to the sealant) or a sealable skin (the surface to form a seal). The composition of the A layers may be the same or different, but conform to the limitations set out herein. Preferably, the A layers are identical. The composition of the B layers may also be the same or different, but conform to the limitations set out herein. The two substrate inner layers each has a density of at least about 0.003 g/cm³ higher than that of the substrate outer layer on the same side of the substrate core layer. Preferably, at least one of the two substrate inner layers has a density of about 0.925 to about 0.965 g/cm³.

The multi-layer film described herein may have an A'/Y'/A' structure for the sealant, wherein A' is a sealant outer layer and Y' is the sealant core layer in contact with the sealant outer layer. Suitably one or both sealant outer layers are a skin layer forming one or both sealant surfaces and can serve as a lamination skin (the surface to be adhered to the substrate) or a sealable skin (the surface to form a seal). The composition of the A' layers may be the same or different, but conform to the limitations set out herein for the sealant. Preferably, the A' layers are identical. The sealant may have an A'/B'/X'/B'/A' structure wherein A' are sealant outer layers and X' represents the sealant core layer and B' are sealant inner layers between the sealant core layer and each sealant outer layer. The composition of the B' layers may also be the same or different. The A' and B' layers may have the same composition or different compositions. Preferably, at least one of the B' layers has a different composition with a density higher than that of the A' layer.

In a preferred embodiment, the multi-layer film comprises a substrate having an A/B/X/B/A structure and a sealant having an A'/Y'/A' structure, wherein the substrate comprises: (a) two substrate outer layers, each comprising a blend of a first and a second polyethylene, wherein the first polyethylene is present in an amount of about 60 wt% to about 80 wt%, based on total weight of polymer in the substrate outer layer; (b) a substrate core layer between the two substrate outer layers, comprising the first polyethylene in an amount of about 80 wt% to about 100 wt%, based on total weight of polymer in the core layer; and (c) two substrate inner layers between the substrate core layer and each substrate outer layer, each comprising a third polyethylene in an amount of about 80 wt% to about 100 wt%, based on total weight of polymer in the substrate inner layer; wherein the sealant comprises: (d) two sealant outer layers, each comprising a blend of the first and the second polyethylene, wherein the first polyethylene is present in an amount of about 60 wt% to about 80 wt%, based on total weight of polymer in the sealant outer layer; and (e) a sealant core layer between the two outer layers, comprising a blend of the first polyethylene and the third polyethylene, wherein the first polyethylene is present in an amount of about 40 wt% to about 60 wt%, based on total weight of polymer in the sealant core layer; wherein (i) the first polyethylene is derived from ethylene and one or more C₃ to C₂₀ α-olefin comonomers, wherein the first polyethylene has a density of about 0.912 to about 0.935 g/cm³, an MI, I_{2.16}, of about 1 to about 5 g/10 min, an MWD of about 1.5 to about 5.5, and an MIR, I_{21.6}/I_{2.16}, of about 10 to about 100; (ii) the second polyethylene is derived from ethylene and one or more C₃ to C₂₀ α-olefin comonomers, wherein the second polyethylene has a density of about 0.915 to about 0.940 g/cm³, an MI, I_{2.16}, of about 0.1 to about 5 g/10 min, an MWD of about 2.5 to about 5.5, and an MIR, I_{21.6}/I_{2.16}, of about 25 to about 100; and (iii) the third polyethylene has a density of about 0.935 g/cm³ to about 0.965 g/cm³.

The above multi-layer film has at least one of the following properties: (i) a bending stiffness factor of at least about 18 mN/mm; (ii) an elongation at break in the Machine Direction (MD) of at least about 450%; and (iii) a puncture energy at break of at least about 7.5 mJ. Preferably, the multi-layer film also has a non-breakage rate of about 100%.

Preferably, the multi-layer film further has at least one of the following properties: (i) the two substrate inner layers are present at a thickness of about 50% of total thickness of the substrate; (ii) the thickness ratio between each of the sealant outer layers and the sealant core layer is about 1:2; and (iii) the thickness ratio between the substrate and the sealant is about 8:9.

### Film Properties and Applications

The multi-layer films of the present invention may be adapted to form flexible packaging laminate films, including stand-up pouches, as well as a wide variety of other applications, such as cling film, low stretch film, non-stretch wrapping film, pallet shrink, overwrap, agricultural, and collation shrink film. The film structures that may be used for bags are prepared such as sacks, trash bags and liners, industrial liners, produce bags, and heavy duty bags. The film may be used in flexible packaging, food packaging, e.g., fresh cut produce packaging, frozen food packaging, bundling, packaging and unitizing a variety of products. A package comprising a multi-layer film described herein can be heat sealed around package content in the form of a lap seal between respective sealable skins from the substrate and the sealant. The film of the present invention can display outstanding mechanical properties as demonstrated by bending stiffness, elongation, and puncture energy, which is especially important for flexible packaging applications, such as stand-up pouches, characterized by high bending stiffness to stand upright.

The inventive multi-layer film has at least one of the following properties: (i) a bending stiffness factor of at least about 18 mN/mm; (ii) an elongation at break in the Machine Direction (MD) of at least about 450%; and (iii) a puncture energy at break of at least about 7.5 mJ. Preferably, the multi-layer film may also have a non-breakage rate of about 100%. By using the substrate as described herein for a laminate structure, the long-standing bottleneck in developing alternative laminate solutions for flexible packaging applications with desirable mechanical properties achievable with polyethylene materials and advantages in sealing and recycling can be well addressed.

### Methods for Making the Multi-layer Film

Also provided are methods according to claims 14 and 15 for making multi-layer films of the present invention. The film in step (d) can be formed by laminating the sealant to the substrate.

At least one of the substrate and the sealant of the multi-layer films described herein may be formed by any of the conventional techniques known in the art including blown extrusion, cast extrusion, coextrusion, blow molding, casting, and extrusion blow molding.

In one embodiment of the invention, both of the substrate and the sealant of the multi-layer films of the present invention are formed by using blown techniques, i.e., to form a blown film. For example, the composition described herein can be extruded in a molten state through an annular die and then blown and cooled to form a tubular, blown film, which can then be axially slit and unfolded to form a flat film. As a specific example, blown films can be prepared as follows. The polymer composition is introduced into the feed hopper of an extruder, such as a 50 mm extruder that is water-cooled, resistance heated, and has an L/D ratio of 30:1. The film can be produced using a 28 cm W&H die with a 1.4 mm die gap, along with a W&H dual air ring and internal bubble cooling. The film is extruded through the die into a film cooled by blowing air onto the surface of the film. The film is drawn from the die typically forming a cylindrical film that is cooled, collapsed and, optionally, subjected to a desired auxiliary process, such as slitting, treating, sealing, or printing. Typical melt temperatures are from about 180°C to about 230°C. Blown film rates are generally from about 3 to about 25 kilograms per hour per inch (about 4.35 to about 26.11 kilograms per hour per centimeter) of die circumference. The finished film can be wound into rolls for later processing. A particular blown film process and apparatus suitable for forming films according to embodiments of the present invention is described in U.S. Patent No. 5,569,693. Of course, other blown film forming methods can also be used.

The compositions prepared as described herein are also suited for the manufacture of blown film in a high-stalk extrusion process. In this process, a polyethylene melt is fed through a gap (typically 0.5 to 1.6 mm) in an annular die attached to an extruder and forms a tube of molten polymer which is moved vertically upward. The initial diameter of the molten tube is approximately the same as that of the annular die. Pressurized air is fed to the interior of the tube to maintain a constant air volume inside the bubble. This air pressure results in a rapid 3-to-9-fold increase of the tube diameter which occurs at a height of approximately 5 to 10 times the die diameter above the exit point of the tube from the die. The increase in the tube diameter is accompanied by a reduction of its wall thickness to a final value ranging from approximately 10 to 50 µm and by a development of biaxial orientation in the melt. The expanded molten tube is rapidly cooled (which induces crystallization of the polymer), collapsed between a pair of nip rolls and wound onto a film roll.

In blown film extrusion, the film may be pulled upwards by, for example, pinch rollers after exiting from the die and is simultaneously inflated and stretched transversely sideways to an extent that can be quantified by the blow up ratio (BUR). The inflation provides the transverse direction (TD) stretch, while the upwards pull by the pinch rollers provides a machine direction (MD) stretch. As the polymer cools after exiting the die and inflation, it crystallizes and a point is reached where crystallization in the film is sufficient to prevent further MD or TD orientation. The location at which further MD or TD orientation stops is generally referred to as the "frost line" because of the development of haze at that location.

Variables in this process that determine the ultimate film properties include the die gap, the BUR and TD stretch, the take up speed and MD stretch and the frost line height. Certain factors tend to limit production speed and are largely determined by the polymer rheology including the shear sensitivity which determines the maximum output and the melt tension which limits the bubble stability, BUR and take up speed.

The laminate structure with the inventive multi-layer film prepared as described herein can be formed by laminating respective lamination skins of the sealant to the substrate as previously described herein using any process known in the art, including solvent based adhesive lamination, solvent less adhesive lamination, extrusion lamination, heat lamination, etc.

In one particular desirable embodiment of the disclosure, a lap seal is formed by sealing together respective sealable skins of the substrate and the sealant. The lap seal described herein can be made by any process such as extrusion coating, lamination, sheet extrusion, injection molding or cast film processes. As a result of presence of the first polyethylene described herein in similar compositions in both of the respective sealable skins from the substrate and the sealant, the sealant can be directly sealed with the substrate instead of with the sealant itself, thus reducing the overall consumption of the materials used for preparing a seal and in turn, an end-use package.

### EXAMPLES

The present invention, while not meant to be limited by, may be better understood by reference to the following examples and tables.

### Example 1

Example 1 illustrates mechanical performance demonstrated by two inventive samples (Samples 1 and 2) in comparison with six comparative samples (Samples 3-8) differing from the inventive samples in both sealants and substrates (a PET substrate for Samples 3-6 and a BOPP substrate for Samples 7 and 8). Polyethylene and additive products used in the samples include: EXCEED™ 1018KB mPE resin (density: 0.918 g/cm³, MI: 1.0 g/10min, MIR: 16) (ExxonMobil Chemical Company, Houston, Texas, USA), EXCEED™ 1012MJ mPE resin (density: 0.912 g/cm³, MI: 1.0 g/10min, MIR: 16) (ExxonMobil Chemical Company, Houston, Texas, USA), EXCEED™ 1018LA mPE resin (density: 0.918 g/cm³, MI: 1.0 g/10min, MIR: 16) (ExxonMobil Chemical Company, Houston, Texas, USA), ENABLE™ 20-05HE mPE resin (density: 0.920 g/cm³, MI: 0.5 g/10min, MIR: 42) (ExxonMobil Chemical Company, Houston, Texas, USA), ExxonMobil™ HDPE HTA 002 resin (density: 0.952 g/cm³) (ExxonMobil Chemical Company, Houston, Texas, USA), ExxonMobil™ LLDPE LL 1001KI C₄-LLDPE resin (density: 0.918 g/cm³, MI: 1.0 g/10min, MIR: 23, Ziegler-Natta catalyzed) (ExxonMobil Chemical Company, Houston, Texas, USA), ExxonMobil™ LLDPE LL 1001XV C₄-LLDPE resin (density: 0.918 g/cm³, MI: 1.0 g/10min, MIR: 23, Ziegler-Natta catalyzed) (ExxonMobil Chemical Company, Houston, Texas, USA), ExxonMobil™ LDPE LD 150AC LDPE resin (density: 0.923 g/cm³, MI: 0.75 g/10min) (ExxonMobil Chemical Company, Houston, Texas, USA), ExxonMobil™ LDPE LD 150BW LDPE resin (density: 0.923 g/cm³, MI: 0.75 g/10min) (ExxonMobil Chemical Company, Houston, Texas, USA), DOWLEX™ 2045.01G C₈-LLDPE resin (density: 0.922 g/cm³, MI: 1.0 g/10min, MIR: 27, Ziegler-Natta catalyzed) (The Dow Chemical Company, Midland, Michigan, USA), and ELITE™ 5401GS C₈-mLLDPE (metallocene linear low density polyethylene) resin (density: 0.917 g/cm³, MI: 1.0 g/10min, MIR: 30) (The Dow Chemical Company, Midland, Michigan, USA); the POLYBATCH™ CE 505E slip agent (A. Schulman, Fairlawn, Ohio, USA), and the POLYBATCH™ F15 antiblock agent (A. Schulman, Fairlawn, Ohio, USA). All samples were prepared on W&H coextrusion blown film line with a BUR of 2.5. Substrates of Samples 1 and 2 with an A/B/X/B/A structure were prepared at a layer thickness ratio of 1:2:2:2:1, and sealants of all samples with an A'/Y'/A' structure were prepared at a layer thickness ratio of 1:2:1. Both B layers of Samples 1 and 2 have a density of 0.0335 g/cm³ higher than that of respective A layers on the same side of the X layer. A schematic representation of film structures for Samples 1 and 2 is shown in Figure 1. Structure-wise formulations and thickness of the laminate film samples, accompanied by test results therefor, are depicted in Table 1.

Bending stiffness, as an indicator for stiffness of the material and its thickness, is the resistance against flexure and was measured by a method referred to as "two point bending method" based on DIN 53121 using a Zwick two point bending equipment mounted on the cross-head in a Zwick 1445 tensile tester. The film samples were conditioned for at least 40 hours at a temperature of 23 ± 2°C and a relative humidity of 50 ± 10% prior to test, and were cut into 38mm-wide 60 mm-long strips measured in both machine direction (MD) and Transverse Direction (TD). The sample is vertically clamped at one end while the force is applied to the free end of the sample normal to its plane (two point bending). The sample is fixed in an upper clamping unit while the free end pushes (upon flexure) against a thin probe (lamella) connected to a sensitive load cell capable of measuring small load values. The bending stiffness factor is defined as the moment of resistance per unit width that the film offers to bending, which can be seen as a width related flexural strength and is expressed in mN.mm.

Tensile properties of the films were measured by a method which is based on ASTM D882 with static weighing and a constant rate of grip separation using a Zwick 1445 tensile tester with a 200N. Since rectangular shaped test samples were used, no additional extensometer was used to measure extension. The nominal width of the tested film sample is 15 mm and the initial distance between the grips is 50 mm. The film samples were conditioned for at least 40 hours at a temperature of 23 ± 2°C and a relative humidity of 50 ± 10%, and were measured in both Machine Direction (MD) and Transverse Direction (TD). Elongation at break is defined as the strain at the corresponding break point, expressed as a change in length per unit of original length multiplied with a factor 100 (%).

Puncture resistance was measured based on CEN 14477, which is designed to provide load versus deformation response under biaxial deformation conditions at a constant relatively low test speed (change from 250 mm/min to 5 mm/min after reach pre-load (0. IN)). Puncture energy to break is the total energy absorbed by the film sample at the moment of maximum load, which is the integration of the area up to the maximum load under the load-deformation curve.

Bag drop performance refers to the capability of a package bag to withstand the sudden shock resulting from a free fall in accordance with ASTM D 5276-98. The low-temperature bag drop performance is measured herein based on ASTM D 5276-98 at a height of two meters with bag samples stored in the deep freezer at -30°C for two days prior to test and is represented by a non-breakage rate of the number of broken bag samples compared to a total of ten tested bag samples for each film formulation.

As shown by test results in Table 1, Samples 1 and 2 of the inventive film, in addition to a bending stiffness at a comparable or even improved level, exceeded in mechanical performance in terms of elongation, puncture energy, and low-temperature bag drop performance, in contrast to those achieved with conventional comparative films composed of a C₄-LLDPE, C₈-LLDPE or C₈-mLLDPE based sealant and a PET or BOPP substrate. Given that a lap seal can be formed with the inventive film to reduce material consumption, this combination of desired mechanical performance and cost-effectiveness can render a promising candidate to replace the current conventional laminates for use in flexible packaging applications.

**Table 1: Structure-wise formulations (wt%), thickness and mechanical properties for film samples of Example 1**

| **Sample No** | 1 | | 2 | | 3 | | 4 | |
|---|---|---|---|---|---|---|---|---|
| **Film / Thickness** | **Sealant / 45 µm** | **Substrate / 40 µm** | **Sealant / 45 µm** | **Substrate/ 40 µm** | **Sealant / 60 µm** | **Substrate / 12 µm** | **Sealant / 60 µm** | **Substrate / 12 µm** |
| **Lamination skin** | EXCEED™ 1018KB (75) ENABLE™ 20-05HE (25) | EXCEED™ 1018KB (75) ENABLE™ 20-05HE (25) | EXCEED™ 1012MJ (74) ENABLE™ 20-05HE (25) POLYBATCH™ CE 505E (1) | EXCEED™ 1018KB (75) ENABLE™ 20-05HE (25) | DOWLEX™ 2045.01G (90) ExxonMobil™ LDPE LD 150AC (10) | PET (100) | ExxonMobil™ LLDPE LL 1001KI (75) ExxonMobil™ LDPE LD 150AC (25) | PET (100) |
| **Inner** | - | ExxonMobil™ HDPE HTA 002 (100) | - | ExxonMobil™ HDPE HTA 002 (100) | - | | - | |
| **Core** | EXCEED™ 1018KB (40) ExxonMobil™ HDPE HTA 002 (60) | EXCEED™ 1018KB (100) | EXCEED™ 1018KB (40) ExxonMobil™ HDPE HTA 002 (60) | EXCEED™ 1018KB (100) | DOWLEX™ 2045.01G (60) ExxonMobil™ LDPE LD 150AC (20) ExxonMobil™ HDPE HTA 002 (20) | | ExxonMobil™ LLDPE LL 1001KI (15) ExxonMobil™ LDPE LD 150AC (75) ExxonMobil™ HDPE HTA 002 (10) | |
| **Inner** | - | ExxonMobil™ HDPE HTA 002 (100) | - | ExxonMobil™ HDPE HTA 002 (100) | - | | - | |
| **Sealable skin** | EXCEED™ 1018KB (75) ENABLE™ 20-05HE (25) | EXCEED™ 1018KB (75) ENABLE™ 20-05HE (25) | EXCEED™ 1012MJ (74) ENABLE™ 20-05HE (25) POLYBATCH™ CE 505E (1) | EXCEED™ 1018KB (75) ENABLE™ 20-05HE (25) | DOWLEX™ 2045.01G (90) ExxonMobil™ LDPE LD 150AC (10) | | ExxonMobil™ LLDPE LL 1001KI (75) ExxonMobil™ LDPE LD 150AC (25) | |
| **Bending stiffness factor (mNmm)** | 22.3 | | 21.4 | | 19.4 | | 18.5 | |
| **Elongation at break in MD (%)** | 518 | | 493 | | 103 | | 106 | |
| **Puncture energy at break (mJ)** | 7.8 | | 8.2 | | 4.6 | | 4.4 | |
| **Non-breakage rate (- 30°C, 2 m)** | 100 | | 100 | | 60 | | 50 | |
| **Sample No.** | 5 | | 6 | | 7 | | 8 | |

| **Film / Thickness** | **Sealant / 60 µm** | **Substrate / 12 µm** | **Sealant / 60 µm** | **Substrate / 12 µm** | **Sealant / 60 µm** | **Substrate / 19 µm** | **Sealant / 60 µm** | **Substrate / 19 µm** |
|---|---|---|---|---|---|---|---|---|
| **Lamination** | ExxonMobil™ LLDPE LL 1001KI (75) ExxonMobil™ LDPELD 150AC (25) | PET (100) | ExxonMobil™ LLDPE LL 1001KI (90) ExxonMobil™ LDPELD 150AC (10) | PET (100) | DOWLEX™ 2045.01G (87) ExxonMobil™ LDPE LD 150BW (10) POLYBATCH ™ CE 505E (1) POLYBATCH ™ F16 (2) | BOPP (100) | ExxonMobil™ LLDPE LL 1001XV (87) ExxonMobil™ LDPE LD 150BW (10) POLYBATCH ™ CE 505E (1) POLYBATCH ™ F15 (2) | |
| **Inner** | - | | - | | - | | - | BOPP (100) |
| **Core** | ExxonMobil™ LLDPE LL 1001KI (75) ExxonMobil™ LDPE LD 150AC (25) | | DOWLEX™ 2045.01G (75) ExxonMobil™ LDPE LD 150AC (25) | | DOWLEX™ 2045.01G (59) ExxonMobil™ LDPE LD 150BW (20) ExxonMobil™ HDPE HTA 002 (20) POLYBATCH ™ CE 505E (1) | | ExxonMobil™ LLDPE LL 1001XV (69) ExxonMobil™ LDPE LD 150BW (30) POLYBATCH ™ CE 505E (1) | |
| **Inner** | - | | - | | - | | - | |
| **Sealable skin** | EXCEED™ 1018KB (75) ENABLE™ 20-05HE (25) | | ELITE™ 5401GS (90) ExxonMobil™ LDPE LD 150AC (10) | | DOWLEX™ 2045.01G (87) ExxonMobil™ LDPE LD 150BW (10) POLYBATCH ™ CE 505E (1) POLYBATCH ™ F16 (2) | | ExxonMobil™ LLDPE LL 1001XV (68) EXCEED™ 1018LA (19) ExxonMobil™ LDPE LD 150BW (10) POLYBATCH ™ CE 505E (1) POLYBATCH ™ F15 (2) | |
| **Bending sitffness factor (mNmm)** | 17.8 | | 16.9 | | 26.2 | | 16 | |
| **Elongation at break in MD (%)** | 95 | | 111 | | 140 | | 143 | |
| **Puncture energy at break (mJ)** | 4 | | 3.9 | | 5.5 | | 5.1 | |
| **Non-breakage rate (-30°C, 2 m)** | 50 | | 40 | | 30 | | 30 | |

### Example 2

Example 2 demonstrates the effect of using the substrate as described herein on mechanical performance of Sample 1' of the inventive film. Samples 9 and 10 were provided as comparative films, prepared by a conventional PET and BOPP substrate, respectively, but otherwise identical or very similar to the inventive Sample 1 in terms of sealant layers' compositions and thickness. A 45 µm three-layer film with an A/Y/A structure at a layer thickness ratio of 1:2:1 was prepared for each sample and was laminated to different substrates to form the three samples. The substrate of Sample 1' was prepared with an A/B/X/B/A structure at a layer thickness ratio of 1:2:2:2:1. Both B layers have a density of 0.0335 g/cm³ higher than that of respective A layers on the same side of the X layer. The bending stiffness, elongation at break in MD, puncture energy at break, and the non-breakage rate were measured as previously described. Structure-wise formulations and test results of the film samples are shown below in Table 2.

It can be seen from Table 2 that the inventive Sample 1 significantly outperformed Samples 9 and 10 in all the tested mechanical properties, which suggests that the mechanical performance achievable with the inventive film may largely depend on the substrate described herein. Particularly, without being bound by theory, it is believed that, given an identical or a very similar sealant, presence of the substrate described herein contributes to improvement in mechanical properties of a laminate structure, based on which high quality and easy processability of flexible packages can be expected.

When numerical lower limits and numerical upper limits are listed herein, ranges from any lower limit to any upper limit are contemplated. As is apparent from the foregoing general description and the specific embodiments, while forms of the invention have been illustrated and described, various modifications can be made without departing from the scope of the invention. Accordingly, it is not intended that the invention be limited thereby.

**Table 2: Structure-wise formulations (wt%), thickness and mechanical properties for film samples of Example 2**

| **Sample No.** | 1' | | 9 | | 10 | |
|---|---|---|---|---|---|---|
| **Film / Thickness** | **Sealant/ 45 µm** | **Substrate / 40 µm** | **Sealant / 45 µm** | **Substrate / 12 µm** | **Sealant / 60 µm** | **Substrate / 19 µm** |
| **Lamination skin** | EXCEED ™ 1018KB (75) ENABLE ™ 20-05HE (25) | EXCEED™ 1018KB (75) ENABLE™ 20-05HE (25) | EXCEED ™ 1018KB (75) ENABLE ™ 20-05HE (25) | PET (100) | EXCEED™ 1018LA (75) ENABLE™ 20-05HE (25) | BOPP (100) |
| **Inner** | - | ExxonMobil™ HDPE HTA 002 (100) | - | | - | |
| **Core** | EXCEED ™ 1018KB (60) ExxonMobi l™ HDPE HTA 002 (40) | EXCEED™ 1018KB (100) | EXCEED ™ 1018KB (60) ExxonMobi l™ HDPE HTA 002 (40) | | EXCEED™ 1018LA (59) ExxonMobil ™ HDPE HTA 002 (40) POLYBATC H™ CE 505E (1) | |
| **Inner** | - | ExxonMobil™ HDPE HTA 002 (100) | - | | - | |
| **Sealable skin** | EXCEED ™ 1018KB (75) ENABLE ™ 20-05HE (25) | EXCEED™ 1018KB (75) ENABLE™ 20-05HE (25) | EXCEED ™ 1018KB (75) ENABLE ™ 20-05HE (25) | | EXCEED™ 1018LA (75) ENABLE™ 20-05HE (25) | |
| **Bending stiffness factor(mNmm)** | 18.4 | | 10.7 | | 14.6 | |
| **Elongation at break in MD (%)** | 505 | | 108 | | 139 | |
| **Puncture energy at break (mJ)** | 7.7 | | 4.6 | | 5.5 | |
| **Non-breakage rate (-30°C, 2 m)** | 100 | | 90 | | 30 | |

## Claims

1. A multilayer film, comprising a substrate, wherein the substrate comprises:
(a) two substrate outer layers and a substrate core layer between the two substrate outer layers, wherein each of the two substrate outer layers and the substrate core layer comprises a first polyethylene derived from ethylene and one or more C₃ to C₂₀ α-olefin comonomers, wherein the first polyethylene has a density of 0.900 to 0.940 g/cm³, a melt index (MI), I_{2.16}, of 0.1 to 15 g/10 min, a molecular weight distribution (MWD) of 1.5 to 5.5, and a melt index ratio (MIR), I_{21.6}/I_{2.16}, of 10 to 100; and
(b) two substrate inner layers, each having a density of at least 0.003 g/cm³ higher than that of the substrate outer layer on the same side of the substrate core layer, wherein each substrate inner layer is between the substrate core layer and each substrate outer layer;
**characterized in that** the multilayer film additionally comprises a sealant, the sealant comprising two sealant outer layers and a sealant core layer between the two sealant outer layers, wherein each of the two sealant outer layers and the sealant core layer comprises a fourth polyethylene derived from ethylene and one or more C₃ to C₂₀ α-olefin comonomers, wherein the fourth polyethylene has a density of 0.900 to 0.940 g/cm³, an MI, I_{2.16}, of 0.1 to 15 g/10 min, an MWD of 1.5 to 5.5, and an MIR, I_{21.6}/I_{2.16}, of 10 to 100; wherein the multilayer film has at least one of the following properties: (i) a bending stiffness factor of at least 18 mN/mm; (ii) an elongation at break in the Machine Direction (MD) of at least 450%; and (iii) a puncture energy at break of at least 7.5 mJ.

2. The multilayer film of claim 1, wherein the multilayer film has a non-breakage rate of 100%.

3. The multilayer film of claim 1 or claim 2, wherein at least one of the two substrate outer layers further comprises a second polyethylene derived from ethylene and one or more C₃ to C₂₀ α-olefin comonomers, wherein the second polyethylene has a density of 0.910 to 0.945 g/cm³, an MI, I_{2.16}, of 0.1 to 15 g/10 min, an MWD of 2.5 to 5.5, and an MIR, I_{21.6}/I_{2.16}, of 25 to 100.

4. The multilayer film of claim 3, wherein the second polyethylene is present in an amount of no more than 50 wt%, based on total weight of polymer in the substrate outer layer.

5. The multilayer film according to any one of claims 1 to 4, wherein the two substrate outer layers are identical.

6. The multilayer film according to any one of claims 1 to 5, wherein at least one of the two substrate inner layers has a density of 0.925 to 0.965 g/cm³.

7. The multilayer film according to any one of claims 1 to 6, wherein at least one of the substrate inner layers comprises a third polyethylene having a density of at least 0.935 g/cm³.

8. The multilayer film according to any one of claims 1 to 7, wherein the two substrate inner layers are identical.

9. The multilayer film according to any one of claims 1 to 8, wherein the two substrate inner layers are present at a thickness of 20% to 70% of total thickness of the substrate.

10. The multilayer film according to any one of claims 1 to 9, wherein at least one of the two sealant outer layers further comprises a fifth polyethylene derived from ethylene and one or more C₃ to C₂₀ α-olefin comonomers, wherein the fifth polyethylene has a density of 0.910 to 0.945 g/cm³, an MI, I_{2.16}, of 0.1 to 15 g/10 min, an MWD of 2.5 to 5.5, and an MIR, I_{21.6}/I_{2.16}, of 25 to 100.

11. The multilayer film of claim 10, wherein the fifth polyethylene is present in an amount of no more than 50 wt%, based on total weight of polymer in the sealant outer layer.

12. The multilayer film according to any one of claims 1 to 11 wherein the two sealant outer layers are identical.

13. The multilayer film of claim 7, or any one of claims 8 to 12 when dependent on claim 7, wherein:
(a) the two substrate outer layers each comprise a blend of the first and the second polyethylene, wherein the first polyethylene is present in an amount of 60 wt% to 80 wt%, based on total weight of polymer in the substrate outer layer;
(b) the substrate core layer between the two substrate outer layers comprises the first polyethylene in an amount of 80 wt% to 100 wt%, based on total weight of polymer in the core layer;
(c) the two substrate inner layers between the substrate core layer and each substrate outer layer each comprise the third polyethylene in an amount of 80 wt% to 100 wt%, based on total weight of polymer in the substrate inner layer;
and wherein:
(d) the two sealant outer layers each comprise a blend of the first and the second polyethylene, wherein the first polyethylene is present in an amount of 60 wt% to 80 wt%, based on total weight of polymer in the sealant outer layer; and
(e) the sealant core layer between the two outer layers comprises a blend of the first polyethylene and the third polyethylene, wherein the first polyethylene is present in an amount of 40 wt% to 60 wt%, based on total weight of polymer in the sealant core layer;
wherein (i) the first polyethylene has a density of 0.912 to 0.935 g/cm³, and an MI, I_{2.16}, of 1 to 5 g/10 min (ii) the second polyethylene has a density of 0.915 to 0.940 g/cm³, and an MI, I_{2.16}, of 0.1 to 5 g/10 min; and (iii) the third polyethylene has a density of 0.935 g/cm³ to 0.965 g/cm³.

14. A method for making a multilayer film comprising a substrate, comprising the steps of:
(a) preparing two substrate outer layers and a substrate core layer between the two substrate outer layers, wherein each of the two outer layers and the core layer comprises a first polyethylene derived from ethylene and one or more C₃ to C₂₀ α-olefin comonomers, wherein the first polyethylene has a density of 0.900 to 0.940 g/cm³, an MI, I_{2.16}, of 0.1 to 15 g/10 min, an MWD of 1.5 to 5.5, and an MIR, I_{21.6}/I_{2.16}, of 10 to 100;
(b) preparing two substrate inner layers, each having a density of at least 0.003 g/cm³ higher than that of the substrate outer layer on the same side of the substrate core layer, wherein each substrate inner layer is between the substrate core layer and each substrate outer layer;
(c) preparing a substrate comprising the layers in steps (a) and (b); and
(d) forming a film comprising the substrate in step (c);
**characterized in that** the multilayer film comprises a sealant and the method comprises preparing a sealant comprising two sealant outer layers and a sealant core layer between the two sealant outer layers, wherein each of the two sealant outer layers and the sealant core layer comprises a second polyethylene derived from ethylene and one or more C₃ to C₂₀ α-olefin comonomers, wherein the second polyethylene has a density of 0.900 to 0.940 g/cm³, an MI, I_{2.16}, of 0.1 to 15 g/10 min, an MWD of 1.5 to 5.5, and an MIR, I_{21.6}/I_{2.16}, of 10 to 100;
wherein the multilayer film has at least one of the following properties: (i) a bending stiffness factor of at least 18 mN/mm; (ii) an elongation at break in the Machine Direction (MD) of at least 450%; and (iii) a puncture energy at break of at least 7.5 mJ.

15. The method of claim 14, wherein the film in step (d) is formed by laminating the sealant to the substrate.

## Patentansprüche

1. Mehrschichtige Folie, die ein Substrat umfasst, das folgendes umfasst:
(a) zwei Substrataußenschichten und eine Substratkernschicht zwischen den beiden Substrataußenschichten, wobei jede der beiden Substrataußenschichten und der Substratkernschicht ein erstes Polyethylen umfasst, das von Ethylen und einem oder mehreren C₃- bis C₂₀-α-Olefincomonomeren abgeleitet ist, wobei das erste Polyethylen eine Dichte von 0,900 bis 0,940 g/cm³, einen Schmelzindex (MI), I_{2,16}, von 0,1 bis 15 g/10 min, eine Molekulargewichtsverteilung (MWD) von 1,5 bis 5,5 und ein Schmelzindexverhältnis (MIR), I_{21,6}/I_{2,16}, von 10 bis 100 aufweist, und
(b) zwei Substratinnenschichten, von denen jede eine Dichte aufweist, die mindestens 0,003 g/cm³ höher als diejenige der Substrataußenschicht auf derselben Seite der Substratkernschicht ist, wobei jede Substratinnenschicht sich zwischen der Substratkernschicht und jeder Substrataußenschicht befindet,
**dadurch gekennzeichnet, dass** die mehrschichtige Folie zusätzlich ein Siegelmittel umfasst, wobei das Siegelmittel zwei Siegelaußenschichten und eine Siegelkernschicht zwischen den beiden Siegelaußenschichten umfasst, wobei jede der beiden Siegelaußenschichten und der Siegelkernschicht ein viertes Polyethylen umfasst, das von Ethylen und einem oder mehreren C₃- bis C₂₀-α-Olefincomonomeren abgeleitet ist, wobei das vierte Polyethylen eine Dichte von 0,900 bis 0,940 g/cm³, einen MI, I_{2,16}, von 0,1 bis 15 g/10 min, eine MWD von 1,5 bis 5,5, und ein MIR, I_{21,6}/I_{2,16}, von 10 bis 100 aufweist, wobei die mehrschichtige Folie mindestens eine der folgenden Eigenschaften aufweist: (i) einen Biegesteifigkeitsfaktor von mindestens 18 mN/mm; (ii) eine Bruchdehnung in Maschinenrichtung (MD) von mindestens 450 %, und (iii) eine Durchstoßbruchenergie von mindestens 7,5 mJ.

2. Mehrschichtige Folie nach Anspruch 1, die eine Nicht-Bruchquote von 100 % aufweist.

3. Mehrschichtige Folie nach Anspruch 1 oder Anspruch 2, bei der mindestens eine der beiden Substrataußenschichten des Weiteren ein zweites Polyethylen umfasst, das von Ethylen und einem oder mehreren C₃- bis C₂₀-α-Olefincomonomeren abgeleitet ist, wobei das zweite Polyethylen eine Dichte von 0,910 bis 0,945 g/cm³, einen MI, I_{2,16}, von 0,1 bis 15 g/10 min, eine MWD von 2,5 bis 5,5 und ein MIR, I_{21,6}/I_{2,16}, von 25 bis 100 aufweist.

4. Mehrschichtige Folie nach Anspruch 3, bei der das zweite Polyethylen in einer Menge von nicht mehr als 50 Gew. % vorhanden ist, bezogen auf das Gesamtgewicht des Polymers der Substrataußenschicht.

5. Mehrschichtige Folie nach einem der Ansprüche 1 bis 4, bei der die beiden Substrataußenschichten identisch sind.

6. Mehrschichtige Folie nach einem der Ansprüche 1 bis 5, bei der mindestens eine der beiden Substratinnenschichten eine Dichte von 0,925 bis 0,965 g/cm³ aufweist.

7. Mehrschichtige Folie nach einem der Ansprüche 1 bis 6, bei der mindestens eine der Substratinnenschichten drittes Polyethylen mit einer Dichte von mindestens 0,935 g/cm³ umfasst,

8. Mehrschichtige Folie nach einem der Ansprüche 1 bis 7, bei der die beiden Substratinnenschichten identisch sind.

9. Mehrschichtige Folie nach einem der Ansprüche 1 bis 8, bei der die beiden Substratinnenschichten in einer Dicke von 20 % bis 70 % der Gesamtdicke des Substrats vorhanden sind.

10. Mehrschichtige Folie nach einem der Ansprüche 1 bis 9, bei der mindestens eine der beiden Siegelaußenschichten des Weiteren ein fünftes Polyethylen umfasst, das von Ethylen und einem oder mehreren C₃- bis C₂₀-α-Olefincomonomeren abgeleitet ist, wobei das fünfte Polyethylen eine Dichte von 0,910 bis 0,945 g/cm³, einen MI, I_{2,16}, von 0,1 bis 15 g/10 min, eine MWD von 2,5 bis 5,5 und ein MIR, I_{21,6}/I_{2,16}, von 25 bis 100 aufweist.

11. Mehrschichtige Folie nach Anspruch 10, bei der das fünfte Polyethylen in einer Menge von nicht mehr als 50 Gew.% vorhanden ist, bezogen auf das Gesamtgewicht des Polymers der Siegelaußenschicht.

12. Mehrschichtige Folie nach einem der Ansprüche 1 bis 11, bei der die beiden Siegelaußenschichten identisch sind.

13. Mehrschichtige Folie nach Anspruch 7 oder einem der Ansprüche 8 bis 12 in Abhängigkeit von Anspruch 7, bei der
(a) die beiden Substrataußenschichten jeweils ein Gemisch des ersten und des zweiten Polyethylens umfassen, wobei das erste Polyethylen in einer Menge von 60 Gew.% bis 80 Gew.% vorhanden ist, bezogen auf das Gesamtgewicht des Polymers in der Substrataußenschicht,
(b) die Substratkernschicht zwischen den beiden Substrataußenschichten das erste Polyethylen in einer Menge von 80 Gew.% bis 100 Gew.% umfasst, bezogen auf das Gesamtgewicht des Polymers in der Kernschicht,
(c) die beiden Substratinnenschichten zwischen der Substratkernschicht und jeder Substrataußenschicht jeweils das dritte Polyethylen in einer Menge von 80 Gew.% bis 100 Gew.% umfassen, bezogen auf das Gesamtgewicht des Polymers in der Substratinnenschicht,
und wobei
(d) die beiden Siegelaußenschichten jeweils ein Gemisch des ersten und des zweiten Polyethylens umfassen, wobei das erste Polyethylen in einer Menge von 60 Gew.% bis 80 Gew.% vorhanden ist, bezogen auf das Gesamtgewicht des Polymers in der Siegelaußenschicht, und
(e) die Siegelkernschicht zwischen den beiden Außenschichten ein Gemisch des ersten Polyethylens und des dritten Polyethylens umfasst, wobei das erste Polyethylen in einer Menge von 40 Gew.% bis 60 Gew.% vorhanden ist, bezogen auf das Gesamtgewicht des Polymers in der Siegelkernschicht,
wobei (i) das erste Polyethylen eine Dichte von 0,912 bis 0,935 g/cm³ und einen MI, I_{2,16}, von 1 bis 5 g/10 min aufweist, (ii) das zweite Polyethylen eine Dichte von 0,915 bis 0,940 g/cm³ und einen MI, I_{2,16}, von 0,1 bis 5 g/10 min aufweist, und (iii) das dritte Polyethylen eine Dichte von 0,935 g/cm³ bis 0,965 g/cm³ aufweist.

14. Verfahren zum Fertigen einer mehrschichtigen Folie, die ein Substrat umfasst, bei dem in den folgenden Schritten
(a) zwei Substrataußenschichten und eine Substratkernschicht zwischen den beiden Substrataußenschichten hergestellt werden, wobei jede der beiden Außenschichten und der Kernschicht ein erstes Polyethylen umfasst, das von Ethylen und einem oder mehreren C₃- bis C₂₀-α-Olefincomonomeren abgeleitet ist, wobei das erste Polyethylen eine Dichte von 0,900 bis 0,940 g/cm³, einen MI, I_{2,16}, von 0,1 bis 15 g/10 min, eine MWD von 1,5 bis 5,5, und ein MIR, I_{21,6}/I_{2,16}, von 10 bis 100 aufweist,
(b) zwei Substratinnenschichten hergestellt werden, von denen jede eine Dichte aufweist, die mindestens 0,003 g/cm³ höher als diejenige der Substrataußenschicht auf derselben Seite der Substratkernschicht ist, wobei jede Substratinnenschicht sich zwischen der Substratkernschicht und jeder Substrataußenschicht befindet,
(c) ein Substrat hergestellt wird, welches die Schichten der Schritte (a) und (b) umfasst, und
(d) Folie gebildet wird, welche das Substrat in Schritt (c) umfasst,
**dadurch gekennzeichnet, dass** die mehrschichtige Folie ein Siegelmittel umfasst, und das Verfahren Herstellen eines Siegelmittels umfasst, das zwei Siegelaußenschichten und eine Siegelkernschicht zwischen den beiden Siegelaußenschichten umfasst, wobei jede der beiden Siegelaußenschichten und der Siegelkernschicht ein zweites Polyethylen umfasst, das von Ethylen und einem oder mehreren C₃- bis C₂₀-α-Olefincomonomeren abgeleitet ist, wobei das zweite Polyethylen eine Dichte von 0,900 bis 0,940 g/cm³, einen MI, I_{2,16}, von 0,1 bis 15 g/10 min, eine MWD von 1,5 bis 5,5, und ein MIR, I_{21,6}/I_{2,16}, von 10 bis 100 aufweist,
wobei die mehrschichtige Folie mindestens eine der folgenden Eigenschaften aufweist: (i) einen Biegesteifigkeitsfaktor von mindestens 18 mN/mm; (ii) eine Bruchdehnung in Maschinenrichtung (MD) von mindestens 450 %, und (iii) eine Durchstoßbruchenergie von mindestens 7,5 mJ.

15. Verfahren nach Anspruch 14, bei dem die Folie in Schritt (d) durch Laminieren des Siegelmittels an das Substrat gebildet wird.

## Revendications

1. Film multicouche, comprenant un substrat, le substrat comprenant :
(a) deux couches externes de substrat et une couche de noyau de substrat entre les deux couches externes de substrat, chacune des deux couches externes de substrat et la couche de noyau de substrat comprenant un premier polyéthylène issu d'éthylène et d'un ou plusieurs comonomères de type α-oléfine en C₃ à C₂₀, le premier polyéthylène possédant une densité de 0,900 à 0,940 g/cm³, un indice de fluidité à chaud (MI), I_{2,16}, de 0,1 à 15 g/10 min, une distribution de poids moléculaire (MWD) de 1,5 à 5,5, et un rapport d'indice de fluidité à chaud (MIR), I_{21,6}/I_{2,16}, de 10 à 100 ; et
(b) deux couches internes de substrat, chacune possédant une densité au moins 0,003 g/cm³ supérieure à celle de la couche externe de substrat sur le même côté de la couche de noyau de substrat, chaque couche interne de substrat se trouvant entre la couche de noyau de substrat et chaque couche externe de substrat ;
**caractérisé en ce que** le film multicouche comprend de plus un agent d'étanchéité, l'agent d'étanchéité comprenant deux couches externes d'agent d'étanchéité et une couche de noyau d'agent d'étanchéité entre les deux couches externes d'agent d'étanchéité, chacune des deux couches externes d'agent d'étanchéité et la couche de noyau d'agent étanchéité comprenant un quatrième polyéthylène issu d'éthylène et d'un ou plusieurs comonomères de type α-oléfine en C₃ à C₂₀, le quatrième polyéthylène possédant une densité de 0,900 à 0,940 g/cm³, un MI, I_{2,16}, de 0,1 à 15 g/10 min, une MWD de 1,5 à 5,5, et un MIR, I_{21,6}/I_{2,16}, de 10 à 100 ; le film multicouche possédant au moins l'une des propriétés suivantes : (i) un facteur de rigidité en flexion d'au moins 18 mN/mm ; (ii) une élongation à la rupture dans le Sens Machine (MD) d'au moins 450 % ; et (iii) une énergie de perforation à la rupture d'au moins 7,5 mJ.

2. Film multicouche selon la revendication 1, le film multicouche possédant un taux de non-rupture de 100 %.

3. Film multicouche selon la revendication 1 ou la revendication 2, au moins l'une parmi les deux couches externes de substrat comprenant en outre un deuxième polyéthylène issu d'éthylène et d'un ou plusieurs comonomères de type α-oléfine en C₃ à C₂₀, le deuxième polyéthylène possédant une densité de 0,910 à 0,945 g/cm³, un MI, I_{2,16}, de 0,1 à 15 g/10 min, une MWD de 2,5 à 5,5, et un MIR, I_{21,6}/I_{2,16}, de 25 à 100.

4. Film multicouche selon la revendication 3, le deuxième polyéthylène étant présent en une quantité non supérieure à 50 % en poids, basée sur le poids total de polymère dans la couche externe de substrat.

5. Film multicouche selon l'une quelconque des revendications 1 à 4, les deux couches externes de substrat étant identiques.

6. Film multicouche selon l'une quelconque des revendications 1 à 5, au moins l'une parmi les deux couches internes de substrat possédant une densité de 0,925 à 0,965 g/cm³.

7. Film multicouche selon l'une quelconque des revendications 1 à 6, au moins l'une des couches internes de substrat comprenant un troisième polyéthylène possédant une densité d'au moins 0,935 g/cm³.

8. Film multicouche selon l'une quelconque des revendications 1 à 7, les deux couches internes de substrat étant identiques.

9. Film multicouche selon l'une quelconque des revendications 1 à 8, les deux couches internes de substrat étant présentes à raison d'une épaisseur de 20 % à 70 % de l'épaisseur totale du substrat.

10. Film multicouche selon l'une quelconque des revendications 1 à 9, au moins l'une des deux couches externes d'agent d'étanchéité comprenant en outre un cinquième polyéthylène issu d'éthylène et d'un ou plusieurs comonomères de type α-oléfine en C₃ à C₂₀, le cinquième polyéthylène possédant une densité de 0,910 à 0,945 g/cm³, un MI, I_{2,16}, de 0,1 à 15 g/10 min, une MWD de 2,5 à 5,5, et un MIR, I_{21,6}/I_{2,16}, de 25 à 100.

11. Film multicouche selon la revendication 10, le cinquième polyéthylène étant présent en une quantité non supérieure à 50 % en poids, basée sur le poids total de polymère dans la couche externe d'agent d'étanchéité.

12. Film multicouche selon l'une quelconque des revendications 1 à 11, les deux couches externes d'agent d'étanchéité étant identiques.

13. Film multicouche selon la revendication 7, ou l'une quelconque des revendications 8 à 12 lorsqu'elle est dépendante de la revendication 7,
(a) les deux couches externes de substrat comprenant chacune un mélange du premier et du deuxième polyéthylène, le premier polyéthylène étant présent en une quantité de 60 % en poids à 80 % en poids, sur la base du poids total de polymère dans la couche externe de substrat ;
(b) la couche de noyau de substrat entre les deux couches externes de substrat comprenant le premier polyéthylène en une quantité de 80 % en poids à 100 % en poids, sur la base du poids total de polymère dans la couche de noyau ;
(c) les deux couches internes de substrat entre la couche de noyau de substrat et chaque couche externe de substrat comprenant chacune le troisième polyéthylène en une quantité de 80 % en poids à 100 % en poids, sur la base du poids total de polymère dans la couche interne de substrat ;
et :
(d) les deux couches externes d'agent d'étanchéité comprenant chacune un mélange du premier et du deuxième polyéthylène, le premier polyéthylène étant présent en une quantité de 60 % en poids à 80 % en poids, sur la base du poids total de polymère dans la couche externe d'agent d'étanchéité ; et
(e) la couche de noyau d'agent d'étanchéité entre les deux couches externes comprenant un mélange du premier polyéthylène et du troisième polyéthylène, le premier polyéthylène étant présent en une quantité de 40 % en poids à 60 % en poids, sur la base du poids total de polymère dans la couche de noyau d'agent d'étanchéité ;
(i) le premier polyéthylène possédant une densité de 0,912 à 0,935 g/cm³, et un MI, I_{2,16}, de 1 à 5 g/10 min ; (ii) le deuxième polyéthylène possédant une densité de 0,915 à 0,940 g/cm³, et un MI, I_{2,16}, de 0,1 à 5 g/10 min ; et (iii) le troisième polyéthylène possédant une densité de 0,935 g/cm³ à 0,965 g/cm³.

14. Procédé pour la fabrication d'un film multicouche comprenant un substrat, comprenant les étapes de :
(a) préparation de deux couches externes de substrat et d'une couche de noyau de substrat entre les deux couches externes de substrat, chacune des deux couches externes et la couche de noyau comprenant un premier polyéthylène issu d'éthylène et d'un ou plusieurs comonomères de type α-oléfine en C₃ à C₂₀, le premier polyéthylène possédant une densité de 0,900 à 0,940 g/cm³, un MI, I_{2,16}, de 0,1 à 15 g/10 min, une MWD de 1,5 à 5,5, et un MIR, I_{21,6}/I_{2,16}, de 10 à 100 ;
(b) préparation de deux couches internes de substrat, chacune possédant une densité au moins 0,003 g/cm³ supérieure à celle de la couche externe de substrat sur le même côté de la couche de noyau de substrat, chaque couche interne de substrat se trouvant entre la couche de noyau de substrat et chaque couche externe de substrat ;
(c) préparation d'un substrat comprenant les couches dans les étapes (a) et (b) ; et
(d) formation d'un film comprenant le substrat dans l'étape (c) ;
**caractérisé en ce que** le film multicouche comprend un agent d'étanchéité et le procédé comprend la préparation d'un agent d'étanchéité comprenant deux couches externes d'agent d'étanchéité et une couche de noyau d'agent d'étanchéité entre les deux couches externes d'agent d'étanchéité, chacune des deux couches externes d'agent d'étanchéité et la couche de noyau d'agent d'étanchéité comprenant un deuxième polyéthylène issu d'éthylène et d'un ou plusieurs comonomères de type α-oléfine en C₃ à C₂₀, le deuxième polyéthylène possédant une densité de 0,900 à 0,940 g/cm³, un MI, I_{2,16}, de 0,1 à 15 g/10 min, une MWD de 1,5 à 5,5, et un MIR, I_{21,6}/I_{2,16}, de 10 à 100 ;
le film multicouche possédant au moins l'une des propriétés suivantes : (i) un facteur de rigidité en flexion d'au moins 18 mN/mm ; (ii) une élongation à la rupture dans le Sens Machine (MD) d'au moins 450 % ; et (iii) une énergie de perforation à la rupture d'au moins 7,5 mJ.

15. Procédé selon la revendication 14, le film dans l'étape (d) étant formé par stratification de l'agent d'étanchéité sur le substrat.
